# EUROPEAN PATENT APPLICATION

(11) **EP 4 422 349 A1**
(43) Date of publication of application: **28.08.2024**
(21) Application number: 21961281.9
(22) Date of filing: 21.10.2021
(51) Int. Cl.: H05B 3/84, B60S 1/02, B60R 1/06

(54) **CONDUCTIVE HEATABLE BULK GLASS FOR THE AUTOMOBILE, RAILWAY AND NAVAL INDUSTRY**

(71) Applicant: CRISTALERÍA PONTEVEDRESA S.L, 36827 A Reigosa - Ponte Caldelas (Pontevedra) (ES)
(72) Inventor: BARBEITO OTERO, Francisco, 36827 A REIGOSA - PONTE CALDELAS (Pontevedra) (ES)
(74) Representative: García Gómez, José Donato
(86) International application number: PCT/ES2021/070764
(87) International publication number: WO 2023/067206

(57) **Abstract**

The present invention discloses a conductive heatable bulk glass for the automobile, railway and naval industry comprising at least one sheet of glass (1), provided in the internal side thereof and side to be heated, with a layer made up of metal-based conductive nanoparticles (including the respective oxides thereof) reaching conductivity levels between 4 Ω/square and Ω/square. It has a simple circuit or metal band (2) located at the ends of the area to be heated, vitrified on the surface of the glass with metal-based ceramic pigment, mainly silver or copper, with line widths from 3 mm. and a micronage comprised between 10-80 microns respectively, on which power connectors (3) built into the system are joined; and it is subsequently subjected to a heat treatment. The connectors are powered by the vehicle's electrical system.

## Description

### Object of the invention.

The present invention is intended to propose an economical thermal glazing that can be used in various industrial sectors such as automobile, naval or railway; allowing effective and efficient demisting or de-icing with a reduced heating duration, a reduction in electrical consumption, an increase in the useful life of the assembly, an increase in resistance to damage and/or vandalism and 100% visibility through the heated area of the glass.

### State of the art.

Thermal glazing used in automobile, industrial, railway and naval vehicles is generally composed of two main technologies.

A first technology, which can be presented as a monolithic system or as a composite of several laminated glass layers, where the face of the composite located inside the compartment of the vehicle in question has a heating network or circuit consisting of resistance bands, lines or tracks of constant section, connected together or in parallel, painted, screen-printed and vitrified on the surface of the glass, is connected to the vehicle's electrical system, generating a resistance and therefore an increase in the temperature of the filament, which heats and increases the temperature of the surface of the glass allowing demisting or de-icing. This system, when painted on the surface to be demisted or de-iced, reduces vision in this area, typically by 8 to 18% of the total surface.

A second technology, is only a composite of several laminated glass layers where, in the intermediate layer of both glass laminates, there is a transparent sheet composed of conductive tungsten microfilaments connected to the vehicle's electrical system, which generate a resistance and therefore an increase in temperature of the filament, and heats and increases the temperature of the composite and of both glass laminates, allowing the demisting or de-icing of the composite.

This system improves visibility compared to the previous one, reducing vision by between 1 and 2% with respect to the total surface, but with a higher electricity consumption, due to the fact that it heats the entire composite and the heat must warm the entire body of the glass until it reaches the surface where the mist, ice or frost is found for subsequent demisting or de-icing.

### Description of the invention.

The present invention consists of a multi-sectoral thermal glazing solution focused on the automobile, railway and naval industries, improving current systems, as it allows a 100% vision of the area to be heated, improved resistance to damage or vandalism and a 40-60% reduction in electricity consumption compared to other technologies, applying Ohm's law.

All these benefits are achieved through the application and use of a glass surface coating, which includes conductive metal-based nanoparticles on the surface of the glass to be heated, reaching conductivity levels between 4 Ω/square and 20 Ω/square, on which a simple metal circuit or band is inserted, vitrified on the surface of the glass with a metal-based ceramic pigment, mainly silver or copper, located at the ends of the area to be heated with thicknesses starting at 3 mm., on which power supply connectors integrated in the system or circuit are placed, which in turn are connected to the vehicle's electrical system, and can be fed with voltages between 10 and 75 volts.

This conductive glass, being a bulk-heatable glass, can be applied and presented in monolithic glass systems as well as in laminated or chambered configurations, depending on the needs of the automobile, naval and railway sectors.

### Description of the figures.

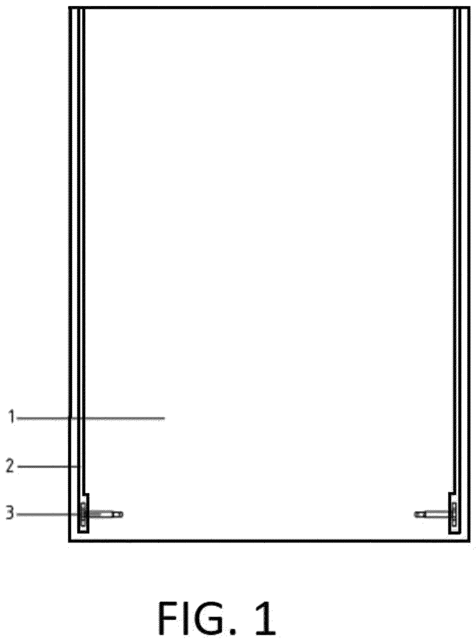

Figure 1: View of an example of an embodiment of the invention.

### Preferred embodiment of the invention.

The following is a brief description of an embodiment of the invention by way of illustrative and non-limiting example.

The most common and widespread embodiment, based on economic and cost-effectiveness data, focuses on the application of the conductive layer on one side of the glass (1), through the deposition of conductive nanoparticles, mainly metallic (including their oxides), on which a single metal circuit or band (2) is subsequently applied, located at the ends of the area to be heated, vitrified on the surface of the glass with a metal-based ceramic pigment, mainly silver or copper, with line widths of 3 mm. and a micronage comprised between 10-80 microns respectively.

Following application and printing of the circuits at the ends of the area to be heated, a heat treatment is applied to the assembly where the conductive paint (2) applied in the previous process is vitrified. This heat treatment consists of applying 705 ºC on the upper face and 730 ºC on the lower face, for 43 seconds/mm of base glass thickness; and a forced air cooling range between 1200-16000 Pascals of pressure depending on the thickness of the base glass.

Following the application of the heat treatment, the connectors (3) are joined by thermal surface bonding, such as tin soldering, for example.

## Claims

1. Conductive heatable bulk glass for automobile, railway and naval applications, **characterised in that** it comprises at least one sheet of glass (1), which may also be presented in laminated or chambered glazing compositions, with a layer comprising conductive metal-based nanoparticles (including their respective oxides) on its inner face and the face to be heated, reaching conductivity levels of between 4 Ω/square and 20 Ω/square.

2. Conductive heatable bulk glass for automobile, railway and naval applications according to claim 1, **characterised by** the presence of a single metal circuit or band (2) located at the ends of the area to be heated, vitrified on the surface of the glass with metallic-based ceramic pigment, mainly silver or copper, with line widths from 3 mm and a micronage of 10-80 microns respectively, on which connectors (3) for power supply integrated in the system are attached.

3. Conductive heatable bulk glass for automobile, railway and naval applications according to claims 1 and 2, **characterised in that** it is subsequently subjected to a heat treatment, in which it is heated for 43 seconds/mm thickness of glass at 705 ºC on the upper face and 730 ºC on the lower face, and a forced air process of between 1200-16000 Pascals of pressure.

4. Conductive heatable bulk glass for automobile, railway and naval applications according to claim 2, **characterised in that** the power connectors are fed by the vehicle's electrical system, with voltages between 10v-75v, preferably 12v or 24v.
